# EUROPEAN PATENT APPLICATION

(11) **EP 1 838 015 A1**
(43) Date of publication of application: **26.09.2007**
(21) Application number: 07005839.1
(22) Date of filing: 21.03.2007
(51) Int. Cl.: H04B 10/155, H04B 10/18

(54) **Optical sending apparatus and optical transmission system**

(30) Priority: 24.03.2006 JP 2006083594
(71) Applicant: FUJITSU LIMITED, Kawasaki-shi, Kanagawa 211-8588 (JP)
(72) Inventor: Yamazaki, Toru, Kawasaki-shi Kanagawa 211-8588 (JP); Sakamoto, Hisaya, Kawasaki-shi Kanagawa 211-8588 (JP)
(74) Representative: HOFFMANN EITLE

(57) **Abstract**

The invention provides an optical sending apparatus which improves the characteristics near zero dispersion without sacrificing the characteristics at high dispersion in an optical duo binary scheme. The apparatus comprises an optical modulation sending unit (1), a driving signal processing unit (2), and a modulation operation switch-over unit (3) for switching over the modulation operation so as to switch over the modulation wave form modulated in intensity in the optical modulation sending unit (1), in either a first modulation waveform in which the intensity of modulated light to the median value of the duo binary signal is minimum and the intensity of modulated light to other two values of the duo binary signal is maximum, and a second modulation waveform in which the intensity of modulated light to the median value of the duo binary signal is maximum and the intensity of modulated light to other two values of the duo binary signal is minimum.

## Description

### BACKGROUND OF THE INVENTION

### 1) Field of the Invention

The invention relates to an optical sending apparatus and an optical transmission system.

### 2) Description of the Related Art

In a recent optical transmission system, along with increase in transmission capacity, the signal spectrum is advanced in density in order to improve the efficiency of use of frequency, and a strict specification is demanded about tolerance of OSNR (optical signal to noise ratio) against wavelength dispersion.

An optical duo binary modulation system employs a scheme of light intensity modulation for setting the light intensity by using duo binary signal. The optical duo binary modulation system is, as compared with NRZ (non return to zero) modulation system, about half in spectrum of light intensity modulation signal, is more than double in dispersion tolerance, and is hence smaller in deterioration of transmission characteristic due to wavelength dispersion of optical fiber. Accordingly, in light modulation of optical transmission system, the optical module by optical duo binary modulation system has been used recently.

Japanese Patent Application Laid-Open No. HEI8-139681 discloses a conventional technique about optical duo binary modulation system. In the duo binary modulation system disclosed in Japanese Patent Application Laid-Open No. HEI 8-139681, a binary data signal is converted into a duo binary signal, and the light intensity corresponding to the median value of duo binary signal is set as minimum, and other binary values are mutually inverted in phase at same light intensity, and thereby the light intensity is modified.

Japanese Patent Application Laid-Open No. 2000-249994 discloses another technique relating to Mach-Zehnder optical modulator having the light intensity changed periodically in triangular function in accordance with voltage difference applied to electrodes, in which, supposing the voltage at which light intensity is "1" to be the center, an electric signal of voltage between Vπ and -Vπ is used when the light intensity is "0", and supposing the voltage at which light intensity is "0" to be the center, a voltage signal between Vπ and -Vπ is used when the light intensity is "1".

However, in the conventional optical duo binary modulation systems disclosed in Japanese Patent Applications Laid-Open Nos. HEI 8-139681 and 2000-249994, for example, as shown in dispersion range D1 at A1 in Fig. 12, when the waveform dispersion value in transmission path is near zero, the OSNR tolerance may be inferior as compared with the case in which the waveform dispersion value is relatively remote from zero area (see dispersion range D2).

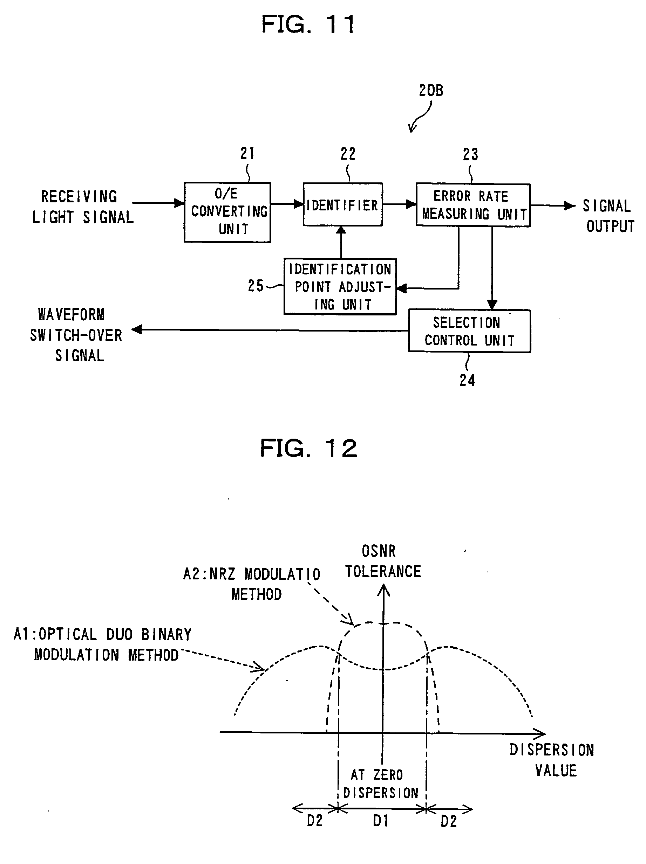

That is, in the conventional optical duo binary modulation system, when the transmission path length is relatively long, and the wavelength dispersion value is a high dispersion value remote from zero area (see dispersion range D2 at A1 in Fig. 12), the dispersion tolerance is favorable as compared with NRZ modulation system (see A2 in Fig. 12). On the other hand, when the transmission path length is relatively short, and the wavelength dispersion value is close to zero dispersion value (see dispersion range D1 at A1 in Fig. 12), although the wavelength dispersion decreases, the OSNR tolerance to wavelength dispersion may be inferior as compared with NRZ modulation system.

### SUMMARY OF THE INVENTION

The invention is devised to solve these problems, and it is hence an object thereof to improve the characteristics near zero dispersion without sacrificing the characteristics at high dispersion in an optical duo binary method.

To achieve the object, the optical sending apparatus of the invention comprises anopticalmodulatingunit formodulating an input signal in intensity light by driving electric signal of duo binary signal, a driving signal processing unit for converting from binary signal to the duo binary signal, and supplying the signal to the optical modulating unit as driving electric signal, and a modulation operation switch-over unit for switching over the modulation operation at the optical modulating unit so as to switch over the operation point bias in the optical modulating unit and to switch over the polarity of the binary signal supplied to the driving signal processing unit, in accordance with the optical transmission characteristics of the transmission path for transmitting the light modulated in intensity.

Preferably, the optical modulating unit includes a Mach-Zehnder optical modulator.

The modulation operation switch-over unit may switch over the modulation operation in the optical modulating unit, on the basis of modulation operation switch-over signal input in accordance with the optical transmission characteristics of the transmission path for transmitting the light sent out after intensity modulation.

In this case, the modulation operation switch-over unit may include an operation point bias switch-over unit for switching over the operation point bias in the optical modulating unit, in accordance with the modulation operation switch-over signal, and a data polarity switch-over unit for switching over the polarity of sending data for switching over the polarity of the binary signal supplied into the driving signal processing unit, in accordance with the modulation operation switch-over signal.

The operation point bias switch-over unit may switch over the modulation mode in the optical modulating unit in accordance with themodulation operation switch-over signal, between a first mode in which the intensity of modulated light to the median value of the duo binary signal is minimum and the intensity of modulated light to other two values of the duo binary signal is maximum, and a second mode in which the intensity of modulated light to the median value of the duo binary signal is maximum and the intensity of modulated light to other two values of the duo binary signal is minimum, by switching over the operation point bias in the optical modulating unit.

The data polarity switch-over unit may, in accordance with the modulation operation switch-over signal, output normal data of sending data as input binary signal directly to the driving signal processing unit when the modulation mode in the optical modulating unit is the first mode, or output inverted data of sending data as input binary signal to the driving signal processing unit when the modulation mode in the optical modulating unit is the second mode.

Every transmission path for transmitting the light modified in intensitymay include a storage unit for storing the modulation mode to be set, either the first mode or the second mode, and a control unit for acquiring the setting of modulation mode in the optical modulating unit in accordance with the transmission path specified as the transmission path for transmitting the light modulated in intensity, by referring to the storage unit, and outputting the modulation operation switch-over signal to the modulation operation switch-over unit, in order to set the modulation operation in the optical modulating unit as the acquired setting.

The optical transmission system of the invention is an optical transmission system comprising an optical sending apparatus for sending an optical signal modulated in intensity on the basis of duo binary signal, and an optical receiving apparatus for receiving an optical signal from the optical sending apparatus through a transmission path, in which the optical sending apparatus includes a driving signal processing unit for converting from binary signal to duo binary signal, an optical modulating unit for modulating an input light in intensity and sending the signal on the basis of the duo binary signal from the driving signal processing unit, and a modulation operation switch-over unit for switching over the modulation operation at the optical modulating unit so as to switch over the operation point bias in the optical modulating unit and to switch over the polarity of the binary signal supplied to the driving signal processing unit in accordance with the modulation operation switch-over signal from the optical receiving apparatus, and the optical receiving apparatus includes a receiving unit for receiving optical signal from the optical sending apparatus through transmission path, and outputting the signal as reception data, an error rate measuring unit for measuring the code error rate of the reception data, and a selection control unit for selecting and controlling about the modulation operation in the optical modulating unit in the optical sending apparatus on the basis of the measurement result in the error rate measuring unit about each light sent after intensity modulation by switch-over of modulation operation in the optical modulating unit.

In this case, in the modulation operation switch-over unit of the optical sending apparatus, in accordance with the modulation operation switch-over signal, the modulation mode in the optical modulating unit can be switched over between a first mode in which the intensity of modulated light to the median value of the duo binary signal is minimum and the intensity of modulated light to other two values of the duo binary signal is maximum, and a second mode in which the intensity of modulated light to the median value of the duo binary signal is maximum and the intensity of modulated light to other two values of the duo binary signal is minimum, by switching over the operation point bias in the optical modulating unit, and the modulation operation in the optical modulating unit is switched over so as to output normal data of sending data as input binary signal directly to the driving signal processing unit when the modulation mode in the optical modulating unit is the first mode, or output inverted data of sending data as the input binary signal to the driving signal processing unit when the modulation mode in the optical modulating unit is the second mode, and the selection control unit includes a first holding unit for temporarily holding the code error rate measured by the error rate measuring unit about the optical signal modulated in intensity by the modulation operation of modulation mode of either the first mode or the second mode, a second holding unit for temporarily holding the code error rate measured by the error rate measuring unit about the optical signal modulated in intensity by the modulation operation of other modulation mode of either the first mode or the second mode, a switch-over signal output unit for measurement for outputting a modulation operation switch-over signal for switching over modulation operation in the optical modulating unit to the modulation operation switch-over unit of the optical sending apparatus for measuring the code error rate to be held in the first holding unit and second holding unit in the error rate measuring unit, a comparator for comparing the error rates held in the first holding unit and second holding unit, and a switch-over signal output unit for selection for outputting a modulation operation switch-over signal for measurement to the modulation operation switch-over unit so as to select the modulation mode favorable in the code error rate as the modulation mode for modulating the intensity in the optical modulating unit on the basis of the result of comparison in the comparator, and the modulation operation switch-over unit of the optical sending apparatus may switch over the modulation operation in the optical modulating unit, in accordance with the modulation operation switch-over signal from the switch-over signal output unit for measurement or switch-over signal output unit for selection.

Thus, according to the invention, by the modulation operation switch-over unit, since the modulation operation in the optical modulating unit can be switched over so as to switch over the operation point bias in the optical modulating unit in accordance with the optical transmission characteristics of the transmission path for transmitting the light modulated in intensity, and to switch over the polarity of the binary signal supplied to the driving signal processing unit, as compared with the duo binary modulating system of the prior art, the OSNR tolerance can be improved also in the transmission path having the dispersion characteristics near the zero dispersion, without sacrificing the OSNR tolerance in the transmission path of high dispersion value.

### BRIEF DESCRIPTION OF THE DRAWINGS

Fig. 1 is a block diagram showing optical sending apparatus in a first embodiment of the invention;
Fig. 2 is a diagram showing an optical modulation characteristic of Mach-Zehnder optical modulator to the driving voltage;
Fig. 3 is a block diagram showing optical transmission system comprising the optical sending apparatus in the first embodiment;
Fig. 4A, Fig. 4B, Fig. 5, Fig. 6A, Fig. 6B, Fig. 7A, Fig. 7B, and Fig. 12 are diagrams for explaining causes of deterioration of OSNR characteristics near zero dispersion value in the case of optical transmission by duo binary modulation system in prior art;
Fig. 8 is a diagram showing OSNR tolerance to dispersion value in the case of duo binary modulation operation in first and second modes;
Fig. 9 is a block diagram showing optical transmission system in a second embodiment of the invention;
Fig. 10 is a block diagram showing configuration of main components of optical receiving apparatus in the second embodiment; and
Fig. 11 is a block diagram showing optical receiving apparatus in a variant of the second embodiment.

### DESCRIPTION OF THE PREFERRED EMBODIMENTS

Referring now to the drawings, embodiments of the invention are described below.

Aside from the above objects of the invention, other technical problems, means for solving the technical problems, and action and effect will become apparent from the disclosure of the embodiments disclosed below.

### [A] Description of first embodiment

### [A1] Configuration

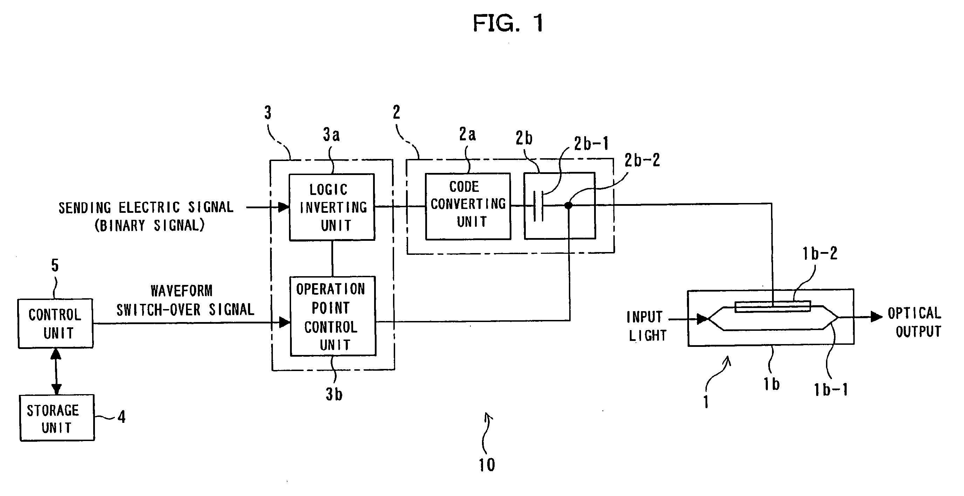

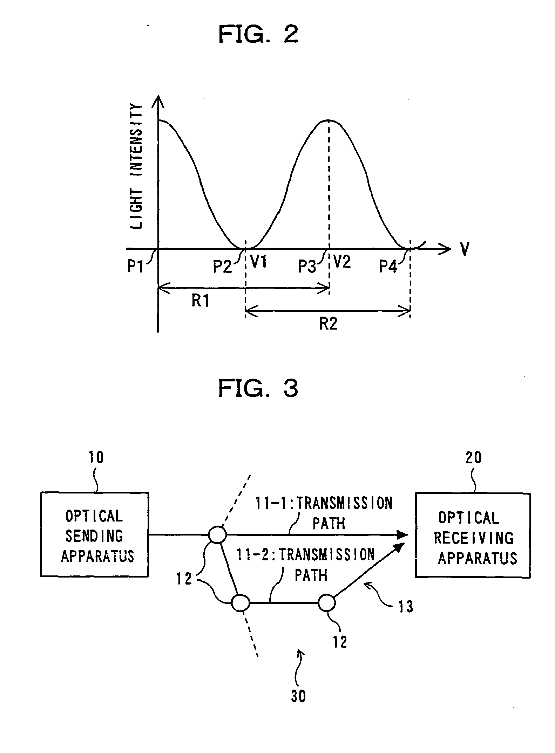

Fig. 1 is a block diagram showing optical sending apparatus in a first embodiment of the invention. An optical sending apparatus 10 shown in Fig. 1 is connected to an optical receiving apparatus 20 through a mesh optical network 13 shown in Fig. 3, and constitutes an optical transmission system 30. The optical sending apparatus 10 modulates the light intensity of sending data by optical duo binary modulation system, and sends out as sending signal light into a transmission path, and it includes an optical modulating unit 1, a driving signal processing unit 2, a modulation operation switch-over unit 3, a storage unit 4, and a control unit 5.

The optical modulating unit 1 modulates the intensity of input light by driving electric signal forming duo binary signal, and is composed of Mach-Zehnder optical modulator 1b. The Mach-Zehnder optical modulator 1b has a Mach-Zehnder optical waveguide 1b-1 formed on a dielectric substrate of lithium niobate or the like, and also includes an electrode 1b-2 for applying an electric field for intensity modulation to the light propagating in an arm waveguide forming the Mach-Zehnder optical waveguide 1b-1.

As a result, the driving electric signal is supplied through the electrode 1b-2, and the input light input from a continuous light source (not shown) is modulated in intensity in accordance with the driving electric signal, and is sent out to the transmission path as sending signal light.

The driving signal processing unit 2 converts from binary signal to the duo binary signal, and supplies the signal to the optical modulating unit 1 as driving electric signal, and includes a code converting unit 2a and driving signal supply unit 2b. The code converting unit 2a receives a binary signal, and processes the binary signal by precoding and low pass filtering, and produces a duo binary signal.

The driving signal supply unit 2b supplies the duo binary signal from the code converting unit 2a into the electrode 1b-2 as driving electric signal, and has a capacity 2b-1 for cutting off the direct-current portion of the duo binary signal from the code converting unit 2a, and also includes a superposing unit 2b-2 for superposing a bias voltage from an operation point control unit 3b described below onto the duo binary signal.

In Fig. 1, the Mach-Zehnder optical modulator 1b composes a single electrode type optical modulating unit 1b having the electrode 1b-2 for supplying the driving electric signal from the driving signal processing unit 2, at one side of two arm waveguides, but it may be replaced by a dual electrode type optical modulating unit having electrodes for supplying the driving electric signal at both arm waveguides.

The modulation operation switch-over unit 3 switches over the modulation operation in the optical modulating unit 1 so as to switch over the operation point bias in the optical modulating unit 1 in accordance with the optical transmission characteristics of the transmission path for transmitting the light modified in intensity by the optical modulating unit 1, specifically the wavelength dispersion characteristics, and also to switch over the polarity of binary signal supplied in the driving signal processing unit 2, and includes a logic inverting unit 3a and an operation point control unit 3b.

Switch-over of modulation operation in the optical modulating unit 1 in the logic inverting unit 3a and operation point control unit 3b composing the modulation operation switch-over unit 3 is executed on the basis of the waveform switch-over signal as modulation operation switch-over signal from the control unit 5 described below. The modulation operation switch-over signal from the control unit 5 corresponds to the wavelength dispersion characteristics of the transmission path for transmitting the light modulated in intensity by the optical modulating unit 1.

The operation point control unit 3b is an operation point bias switch-over unit for switching over the operation point bias in the optical modulating unit 1 in accordance with a waveform switch-over signal from the control unit 5. Specifically, the operation point control unit 3b switches over the operation point bias in the optical modulating unit 1, in accordance with the modulation operation switch-over signal, to set the modulation mode in the optical modulating unit 1, whether in a first mode in which the intensity of modulated light to the median value of the duo binary signal is minimum and the intensity of modulated light to other two values of the duo binary signal is maximum, or in a second mode in which the intensity of modulated light to the median value of the duo binary signal is maximum and the intensity of modulated light to other two values of the duo binary signal is minimum.

Fig. 2 is a diagram showing an optical modulation characteristic of Mach-Zehnder optical modulator 1b to the driving voltage. As shown in Fig. 2, in the Mach-Zehnder optical modulator 1b, the intensity of light modulated in intensity changes periodically like cosine waveform in accordance with the driving voltage. In the duo binary modulation system, the intensity is modulated by supplying the driving electric signal based on duo binary code, on the operation point voltage, that is, voltage points P1 to P3 (voltage points at positions of top-bottom-top in light intensity waveform) in voltage range R1 of one period portion in Fig. 2, or voltage points P2 to P4 (voltage points at positions of bottom-top-bottom in light intensity waveform) in voltage range R2.

At this time, in the operation point control unit 3b, on the basis of the waveform switch-over signal, for example, voltage V1 corresponding to median value P2 in voltage range R1 in Fig. 2 is supplied as bias voltage to the Mach-Zehnder optical modulator 1b, and the modulation mode in the optical modulating unit 1 is set as modulation mode (first mode) in which the voltage points P1 to P3 in voltage range R1 are operation point voltages.

In this case, therefore, the median value of duo binary signal is assigned with voltage value V1 corresponding to voltage point P2 in the bottom of light intensity waveform, as driving voltage signal to electrode 1b-2 of the Mach-Zehnder optical modulator 1b, and other two values of duo binary signal are assigned with voltage points P1, P3 at the top, respectively. As a result, the Mach-Zehnder optical modulator 1b operates in the first mode in which the intensity of modulated light to the median value of the duo binary signal is minimum and the intensity of modulated light to other two values of the duo binary signal is maximum.

Similarly, in the operation point control unit 3b, on the basis of the waveform switch-over signal, for example, voltage V2 corresponding to median value P3 in voltage range R2 in Fig. 2 is supplied as bias voltage to the Mach-Zehnder optical modulator 1b, and the modulation mode in the optical modulating unit 1 is set as modulation mode (second mode) in which the voltage points P2 to P4 in voltage range R2 are operation point voltages.

In this case, the median value of duo binary signal is assigned with voltage value V2 corresponding to voltage point P3 at the top of light intensity waveform, as driving voltage signal to electrode 1b-2 of the Mach-Zehnder optical modulator 1b, and other two values of duo binary signal are assigned with voltage points P2, P4 in the bottom, respectively. As a result, the Mach-Zehnder optical modulator 1b operates in the second mode in which the intensity of modulated light to the median value of the duo binary signal is maximum and the intensity of modulated light to other two values of the duo binary signal is minimum.

The logic inverting unit 3a of themodulation operation switch-over unit 3 is a data polarity switch-over unit for switching over the polarity of sending data as input binary signal and supplying to the driving signal processing unit 2, in accordance with the above-mentioned modulation operation switch-over signal. Specifically, in the logic inverting unit 3a, in accordance with the above-mentioned waveform switch-over signal, when the modulation mode in the optical modulating unit 1 is set in the first mode, normal data of sending data as binary signal input as sending electric signal is output to the driving signal processing unit 2, and when the modulation mode in the optical modulating unit 1 is set in the second mode, inverted data of sending data as binary signal is output to the driving signal processing unit 2.

That is, by the operation point control unit 3, when the operation point voltage of Mach-Zehnder optical modulator 1b is switched over as mentioned above, the modulated waveform is inserted, and in the logic inverting unit 3a, it is necessary to invert also the code assigned in the duo binary signal in the light intensity to be modulated in intensity.

For example, without switching over the code logic corresponding to the waveform switch-over signal in the logic inverting unit 3a, it is supposed that code "0" of sending data is assigned to the median value of duo binary signal, and that code "1" of sending data is assigned to other two values of duo binary signal, in the code inverting unit 2a.

At this time, when the modulation mode in the optical modulating unit 1 is the first mode in which the voltage points P1 to P3 in the voltage range R1 in Fig. 2 are operation point voltages, the driving voltage of voltage point P2 is assigned to the median value (code "0") of duo binary signal, and the input light is modulated in intensity to low level, whereas driving voltages at voltage points P1, P3 are assigned to other two values (code "1") of duo binary signal, and the input light is modulated in intensity to high level. Therefore, corresponding to codes "0", "1" of binary signal, the light intensity is modulated at low level and high level, respectively.

By contrast, when the modulation mode in the optical modulating unit 1 is the second mode in which the voltage points P2 to P4 in the voltage range R2 are operation point voltages, the light intensity modulation level corresponding to binary signal codes "0", "1" is inverted, the level is high and low corresponding to binary signal codes "0", "1" respectively, and the light intensity is inverted and modulated in intensity as compared with the case in which voltage points P1 to P3 are operation point voltages.

In this case, at the side of optical receiving apparatus 20 (see Fig. 3) for receiving the signal light sent out from the optical sending apparatus 10, special signal processing is demanded when receiving the signal for code inverting or the like. Accordingly, in order to avoid the necessity for special signal processing at the receiving side, in the logic inverting unit 3a, the code logic is switched over preliminarily according to the modulation operation switch-over signal (waveform switch-over signal), about the sending data of binary code to be converted to duo binary signal.

For example, by the code converting unit 2a, as mentioned above, when the binary signal code "0" is assigned to the median value of duo binary signal, and binary signal code "1" is assigned to other two values of duo binary signal, if the operation point voltage is switched over from voltage range R1 to voltage range R2 in the operation point control unit 3b by waveform switch-over signal, in the logic inverting unit 3a, the polarity of input sending data is inverted, and the inverted binary signal is output to the code converting unit 2a as the object to be converted to duo binary signal.

That is, the logic inverting unit 3a inverts the input sending data code "0" to "1", or "1" to "0", and outputs to the code inverting unit 2a.

The storage unit 4 stores the modulation waveform to be set out of the first or second modulated waveform, in every transmission path for transmitting the light modulated in intensity.

For example, between the optical sending apparatus 10 and the optical receiving apparatus 20 for receiving the signal light sent out from the optical sending apparatus 10, when a mesh network 13 is built by way of contact node 12 as shown in Fig. 3, a plurality of transmission paths 11-1 to 11-n (n being a natural number of 2 or more). In Fig. 3, transmission paths 11-1 and 11-2 are shown.

In this case, in every one of transmission paths 11-1 to 11-n set between the optical sending apparatus 10 and the optical receiving apparatus 20, if the transmission path length on the whole is different, the dispersion characteristics of transmission paths 11-1 to 11-n are assumed to be different, too.

Accordingly, in the storage unit 4, in every one of transmission paths 11-1 to 11-n set from the optical sending apparatus 10 to the optical receiving apparatus 20, the modulation waveform to be set can be stored (in accordance with the dispersion characteristics of transmission paths 11-1 to 11-n). In other words, in the storage unit 4, in accordance with the dispersion characteristics of transmission paths 11-1 to 11-n set to the optical receiving apparatus 20, setting of modulation operation to be executed by the Mach-Zehnder optical modulator 1b can be stored, that is, whether to set modulation operation by first modulation waveform or to set modulation operation by second modulation waveform.

The control unit 5 receives information about transmission paths 11-1 to 11-n set for transmitting signal light between the optical sending apparatus 10 and the optical receiving apparatus 20, acquires the modulationmode (first mode or second mode) when using the transmission paths 11-1 to 11-n by referring to the storage unit 4, and outputs the waveform switch-over signal corresponding to the acquired modulation mode to the modulation operation switch-over unit 3.

The modulation operation switch-over unit 3 receives the modulation operation switch-over signal corresponding to the wavelength dispersion characteristics of the transmission paths 11-1 to 11-n circulating for transmission of signal light from the control unit 5, switches over the operation point bias in the optical modulating unit 1 at the operation point control unit 3b, and also switches over the polarity of binary signal supplied to the driving signal processing unit 2 in the logic inverting unit 3a on the basis of the modulation operation switch-over signal, and thereby sets the modulation operation in the logic inverting unit 3a to first mode or second mode. As a result, as compared with the duo binary modulation system of prior art, the OSNR characteristics can be improved as described below.

### [A2} Action and effect

In the control unit 5 of the optical sending apparatus 10 thus composed, on the basis of setting of the transmission paths 11-1 to 11-n used for propagation of signal light from the optical sending apparatus 10 to the optical receiving apparatus 20, by referring to the control unit 4, setting of modulation mode (first mode or second mode) in accordance with the transmission paths 11-1 to 11-n to be used is acquired. That is, setting of modulation mode in the optical modulating unit 1 in accordance with the transmission paths 11-1 to 11-n specified as transmission path for transmitting the light modulated in intensity is acquired by referring to the storage unit 4. In the control unit 5, the information about the transmission paths 11-1 to 11-n to be used may be received from the functional part for maintenance and management of network 13, or may be received from the management functional part of transmission path in the optical sending apparatus 10.

In the control unit 5, in accordance with the acquired modulation mode setting, a waveform switch-over signal is output to the modulation operation switch-over unit 3. That is, in order that the modulation operation in the optical modulating unit 1 may be the modulation mode setting acquired by referring to the control unit 4, a modulation switch-over signal is output to the modulation operation switch-over unit 3.

At this time, in the logic invertingunit 3a of the modulation operation switch-over unit 3, the logic about the input sending electric signal is switched over between normal and inverted in accordance with the waveform switch-over signal from the control unit 5. In the operation point control unit 3b, the bias voltage of theMach-Zehnder optical modulator 1b is switched over and set in accordance with the input waveform switch-over signal.

For example, when waveform switch-over signal for settingmodulationmode in the firstmode is input from the control unit 5, in the logic inverting unit 3a, the normal signal of input sending data is output to the code converting unit 2a as binary signal to be converted to duo binary signal, and in the operation point control unit 3b, the bias voltage to the Mach-Zehnder optical modulator 1b is set and controlled at V1 as shown in Fig. 2.

Or, when waveform switch-over signal for setting modulation mode in the second mode is input from the control unit 5, in the logic inverting unit 3a, the inverted signal of input sending data is output to the code converting unit 2a as binary signal to be converted to duo binary signal, and in the operation point control unit 3b, the bias voltage to the Mach-Zehnder optical modulator 1b is set and controlled at V2 as shown in Fig. 2.

Accordingly, in the Mach-Zehnder optical modulator 1b, the operation point voltage is set by the bias voltage set in the operation point control unit 3b, and light is modulated on the basis of the duo binary signal converted by the signal converting unit 2a, and sending signal light is sent to the optical receiving apparatus 20 through any one of the plurality of transmission paths 11-1 to 11-n.

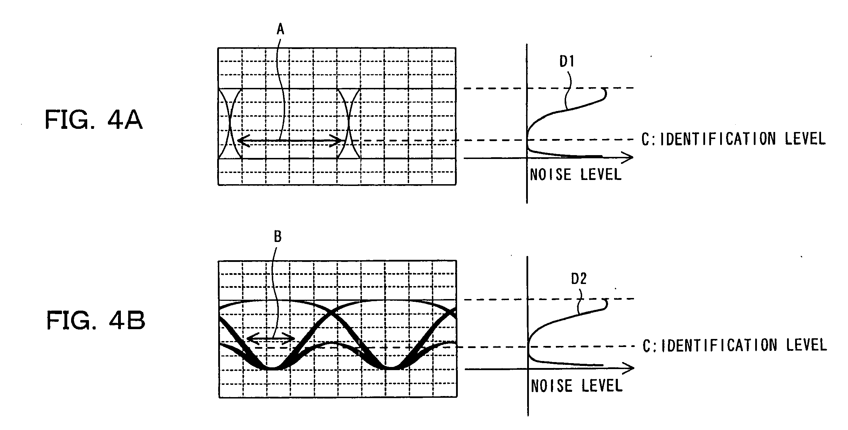

In the case of optical transmission by duo binary modulation system of prior art, the OSNR characteristics deteriorate near the zero dispersion value than in the case of optical transmission by NRZ modulation system shown in Fig. 12. The cause for such deterioration is explained by referring to Fig. 4 to Fig. 7.

In the NRZ modulation system, the driving point of Mach-Zehnder optical modulator corresponding to the binary signal is assigned to two points (for example, points P2 and P3) of half period of optical modulation characteristics corresponding to the driving voltage shown in Fig. 2, corresponding to binary codes 0, 1 so as tomodulate the intensity, and therefore as shown in Fig. 4A, a sufficient phase margin is assured at high level and low level of light intensity (phase margin at low level side is shown at A in the diagram).

Bycontrast, inordinary duo binary modulation system, the driving point of Mach-Zehnder optical modulator to duo binary signal is assigned to the voltage point of top-bottom-top profile of light intensity waveform as shown at points P1 to P3 in Fig. 2, and in this case, however, the sending signal light sent from the optical sending apparatus 10 is extremely narrow in phase margin near the low level of light intensity as shown at B in Fig. 4B.

Therefore, in the optical receiving apparatus 20, in the receiving signal process of sending signal light from the optical sending apparatus 10, the timing duration for judging the low level about identification level (see C in Fig. 4B) is restricted by duration indicated by B, which works against favorable OSNR. Further as shown in D1, D2 in Fig. 4A, Fig. 4B, whether in NRZ modulation system or in duo binary modulation system, more noise components due to amplification by optical amplifier in transmission path are contained in the signal light components at high level side than at low level side generally, and the identification level C is generally set at lower level than intermediate level (50 percent) between high level and low level.

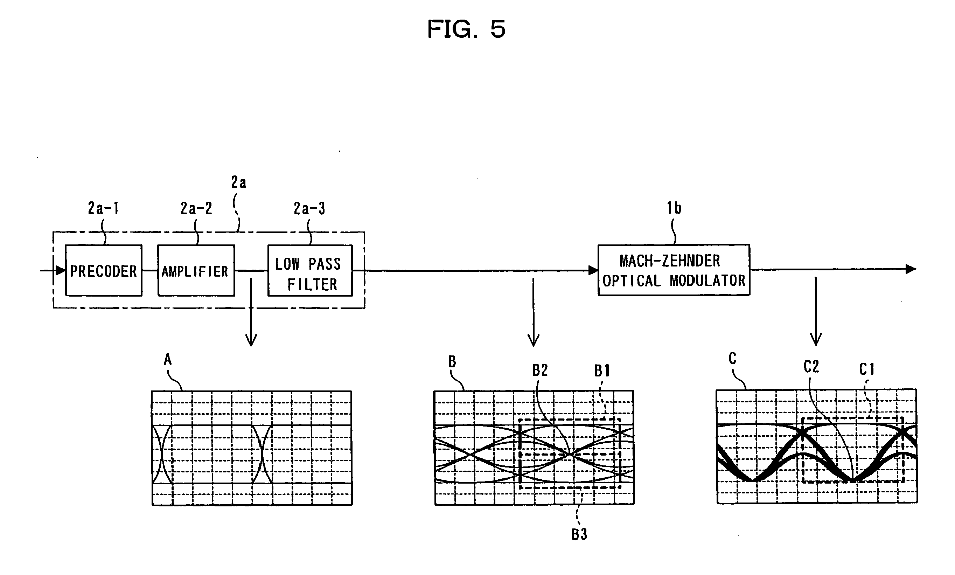

Fig. 5 is a diagram explaining that the phase margin at low level side is narrow in the case of duo binary modulation by assigning the driving point at the voltage point of top-bottom-top profile. In the case of light intensity modulation by duo binary modulation system, usually, to generate a driving voltage signal to be supplied to the Mach-Zehnder optical modulator, signal processing corresponding to the code converting unit 2a shown in Fig. 1 is executed. That is, the code converting unit 2a includes precoder 2a-1, amplifier 2a-2, and low pass filter 2a-3 as shown in Fig. 5. In the diagram, other elements (see 2b, 3 to 5 in Fig. 1) of the optical sending apparatus 10 other than the code converting unit 2a and Mach-Zehnder optical modulator 1b are not shown.

The precoder 2a-1 precodes the binary signal input from the logic inverting unit 3a in order to obtain ternary duo binary signal from the low pass filter output of later stage. The amplifier 2a-2 amplifies the electric signal output from the precoder 2a-1 so as to obtain driving voltage signal having amplitude value change corresponding to the operation point interval. The low pass filter 2a-3 removes higher harmonic components from the driving voltage signal from the amplifier 2a-2, and limits the base band signal band for driving the Mach-Zehnder optical modulator 1b. As a result, the frequency components of driving electric signal in theMach-Zehnder optical modulator 1b can be suppressed substantially to about one quarter of bit rate.

At this time, before band limiting in the low pass filter 2a-3, as shown in eye pattern A in Fig. 5, the phase margin is sufficiently wide at both low level side and high level side. However, after passing through the low pass filter 2a-3, since the driving voltage signal becomes dull, and the eye pattern is changed to B in Fig. 5, and a crossing portion appears in the middle of low level and high level.

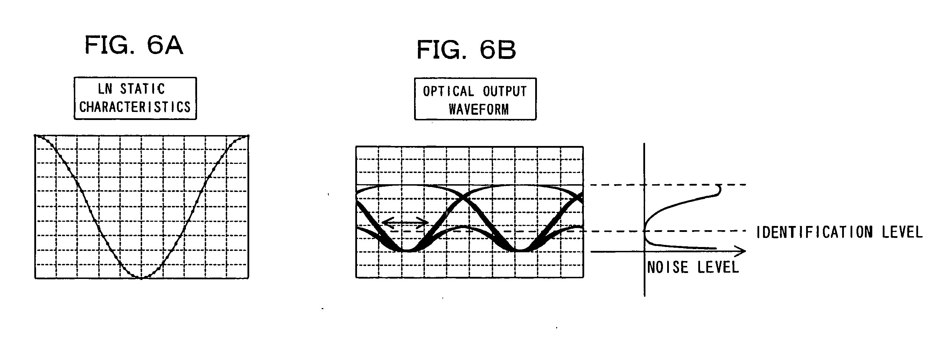

By the driving voltage signal of which waveform is dull after passing through the loss pass filter 2a-3, when optical duo binary modulation is attempted in the operation point configuration of top-bottom-top profile in the Mach-Zehnder optical modulator 1b (see P1 to P3 in Fig. 2, and static characteristics in Fig. 6A), the eye pattern of output light waveform becomes as shown in C in Fig. 5 or Fig. 6B. The data region forming this eye pattern C of output light waveform (see C1 in Fig. 5) substantially corresponds to the waveform cutting out the high half side (see B1 in Fig. 5) of data region in eye pattern B of driving voltage signal.

That is, in the eye pattern B of driving voltage signal, waveform crossing position B2 appears in the middle of low level and high level, and since the waveform crossing position B2 appears at the low level side of light waveform (see C2 in Fig. 5) as it is, the phase margin becomes narrow at low level side.

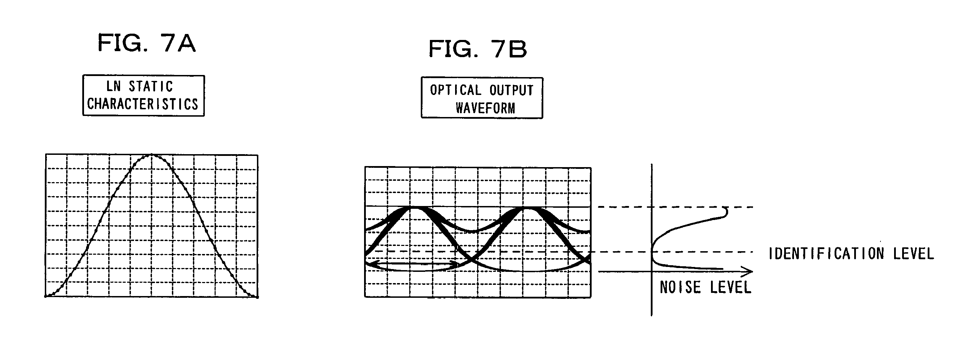

On the other hand, by using the same driving voltage signal of which waveform is dull after passing through the loss pass filter 2a-3, when optical duo binary modulation is attempted in the operation point configuration of bottom-top-bottom profile in the Mach-Zehnder optical modulator 1b (see P2 to P4 in Fig. 2, and static characteristics in Fig. 7A), the eye pattern of output light waveform is wide in phase margin at low level side and narrow in phase margin at high level side as shown in Fig. 7B.

That is, the data region forming this eye pattern of output light waveform shown in Fig. 7B substantially corresponds to the waveform cutting out the low half side (see B3 in Fig. 5) of data region in eye pattern B of driving voltage signal. In this case, the waveform crossing position B2 appearing in the eye pattern B of driving voltage signal appears at the high level side of light waveform as it is, and hence the phase margin becomes narrow at high level side.

Therefore, in the Mach-Zehnder optical modulator 1b, by the operation point configuration of top-bottom-top profile as shown in P1 to P3 in Fig. 2 or Fig. 6A, when duo binary modulation is operated in the first mode, the output light waveform appears as shown in Fig. 6B, and the phase margin is narrow at low level side. On the other hand, by the operation point configuration of bottom-top-bottom profile as shown in P2 to P4 in Fig. 2 or Fig. 7A, when duo binary modulation is operated in the second mode, the output light waveform appears as shown in Fig. 7B, and the phase margin is wide at low level side.

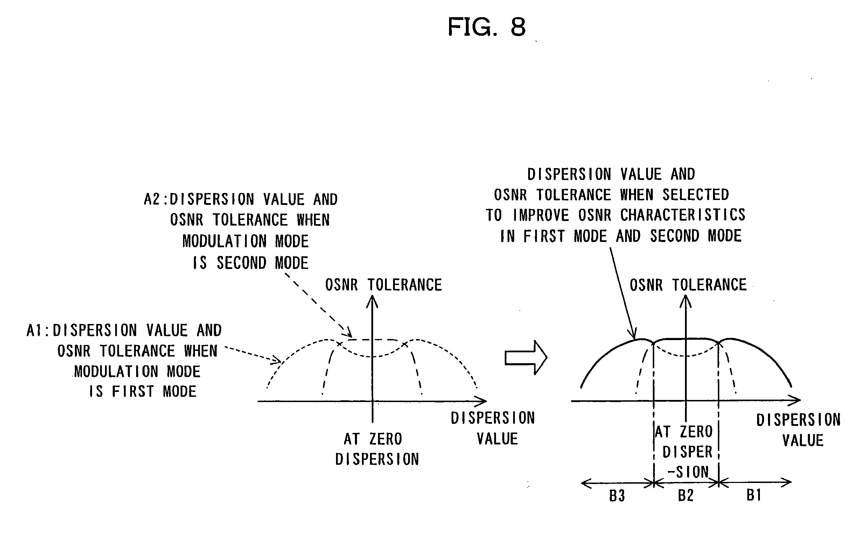

Fig. 8 is a diagram showing the OSNR tolerance to dispersion value in the case of duo binary modulation operation in first and second modes. In Fig. 8, A1 shows the OSNR tolerance corresponding to the dispersion value of transmission path in the case of modulation in first mode, and A2 shows the OSNR tolerance corresponding to the dispersion value of transmission path in the case of modulation in second mode.

In the case of first mode, same as in the prior art, when the wavelength dispersion value in transmission path is close to zero, the OSNR tolerance deteriorates as compared with the case relatively remote from the zero point. In the second mode, the OSNR tolerance to dispersion value of transmission path is nearly same as the characteristics by the NRZ modulation system. That is, when the wavelength dispersion value in transmission path is close to zero, a favorable OSNR tolerance is obtained when modulated in second mode than when modulated in first mode.

Accordingly, in the optical sending apparatus 10 in the first embodiment, on the basis of dispersion characteristics of transmission paths 11-1 to 11-n used for propagation of signal to the optical receiving apparatus 20, in the range near zero dispersion value of the dispersion characteristics as shown in B2 in Fig. 8, the modulation operation switch-over unit 3 switches over the modulation operation in the modulation sending unit 1 so as to modulate in second mode, and in the range remote from zero dispersion value of the dispersion characteristics as shown in B1, B3 in Fig. 8, the modulation operation switch-over unit 3 switches over the modulation operation in the modulation sending unit 1 so as to modulate in first mode.

That is, as shown in Fig. 3, when a plurality of transmission paths 11-1 to 11-n (n being a natural value of 2 or more) can be set as transmission paths of signal light between the optical sending apparatus 10 and optical receiving apparatus 20, dispersion characteristics in transmission paths 11-1 to 11-n are measured in advance. For example, the residual dispersion value when signal light is transmitted through transmission paths 11-1 to 11-n is measured.

When the result of measurement of residual dispersion value corresponds to the dispersion value range shown in B2 in Fig. 8, the modulation operation in the Mach-Zehnder optical modulator 1b is set in second mode, and when corresponding to the dispersion value range shown in B1, B3 in Fig. 8, themodulation operation in the Mach-Zehnder optical modulator 1b is set in first mode, by storing associating with the transmission paths 11-1 to 11-n.

As a result, in the control unit 5, setting of modulation operation of Mach-Zehnder optical modulator 1b corresponding to transmission paths 11-1 to 11-n specified for use in transmission of signal light can be obtained by referring to the storage unit 4, and the waveform switch-over signal can be output to the modulation operation switch-over unit 3.

Thus, in the optical sending apparatus 10 of the first embodiment, since the modulation operation switch-over unit 3 is provided, as compared with the duo binary modulation system of the prior art, the OSNR tolerance can be improved in the transmission path having dispersion characteristics near zero dispersion value without sacrificing the OSNR tolerance in transmission path of high dispersion value.

### [B] Description of second embodiment

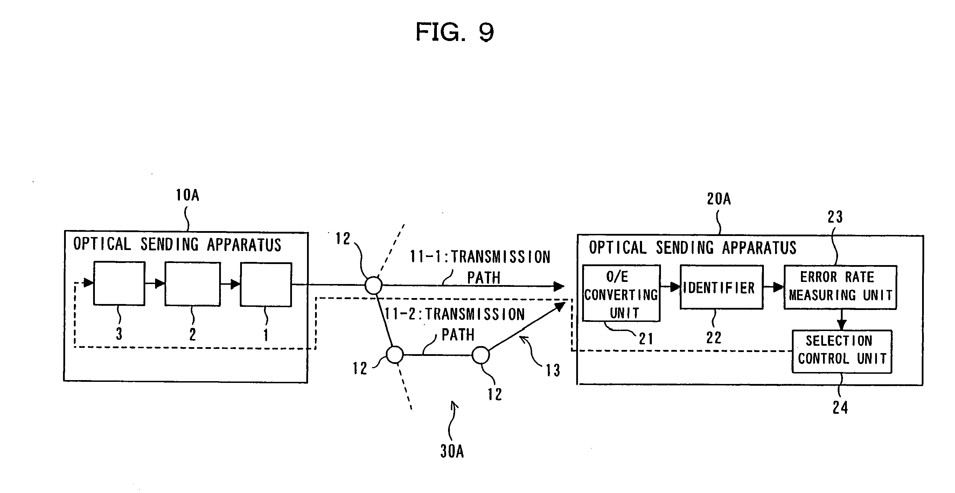

Fig. 9 is a block diagram showing optical transmission system 30A in a second embodiment of the invention. In the optical transmission system 30A shown in Fig. 9, unlike the first embodiment, an optical receiving apparatus 20A has a function of calculating the error rate of receiving signal light, and a function of selecting the modulationmode setting in the sending signal light from an optical sending apparatus 10A, and the optical sending apparatus 10A and optical receiving apparatus 20A are connected by network 13 same as in the first embodiment. In Fig. 9, same components as in Fig. 1 are identified with same reference numerals.

In the optical transmission system 30A having such configuration, the optical receiving apparatus 20A is designed to output a waveform switch-over signal to the modulation operation switch-over unit 3 of the optical sending apparatus 10A. Therefore, in the optical sending apparatus 10A in the second embodiment, it is not required to store setting of modulation mode in accordance with the residual dispersion value measured in transmission paths 11-1 to 11-n preliminarily in the optical sending apparatus 10A, and the structure of storage unit 4 and control unit 5 in Fig. 1 can be omitted.

Other structure of the optical sending apparatus 10A is basically same as in the first embodiment (see 1 to 3) . The modulation operation switch-over unit 3 of the optical sending apparatus 10A in this case, however, switches over the operation point voltage in the optical modulating unit 1 by the operation point control unit 3b in accordance with the modulation operation switch-over signal from the optical receiving apparatus 20A, and also switches over between first mode and second mode of modulation operation in the optical modulating unit 1 by switching over the polarity of binary signal supplied to the driving signal processing unit 2 by the logic inverting unit 3a.

The optical receiving apparatus 20A in the second embodiment receives the light signal from the optical sending apparatus 10A through transmission paths 11-1 to 11-n, and includes O/E (optical/electrical) converting unit 21, identifier 22, error rate measuring unit 23, and selection control unit 24 in order to output the waveform switch-over signal.

The O/E converting unit 21 converts the optical signal from the optical sending apparatus 10A received through the transmission path 11-1 into an electrical signal, and the identifier 22 judges the magnitude of electrical signal from the O/E converting unit 21 by comparing with the identification level, and reproduces the sending data modified in intensity in the optical sending apparatus 10A as receiving data. Therefore, the O/E converting unit 21 and identifier 22 constitute a receiving unit for receiving the optical signal from the optical sending apparatus 10A through transmission paths 11-1 to 11-n, and outputting as receiving data.

The error rate measuring unit 23 corrects error about receiving data reproduced in the identifier 22, and measures the code error rate. In the error rate measuring unit 23, the receiving data after error correction process is output as receiving signal, and the measured code error rate is output to the selection control unit 24.

The selection control unit 24 outputs a waveformswitch-over signal for switching over and controlling the modulation operation in the optical modulating unit 1 in the optical sending apparatus 10A on the basis of code error rate from the error rate measuring unit 23 to the modulation waveform switch-over unit 3. In other words, the selection control unit 24 selects and controls the modulation operation in the optical modulating unit 1 in the optical sending apparatus 10A, on the basis of measurement result in the error rate measuring unit 23 of each light sent after intensity modulation in first and second modes by switch-over of modulation operation in the optical modulating unit 1.

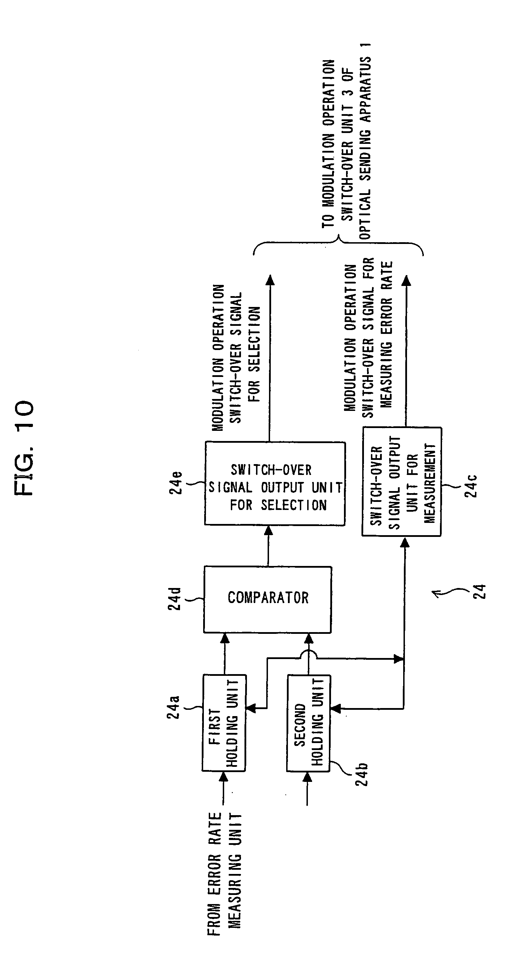

Herein, the selection control unit 24 includes, as shown in Fig. 10, first holding unit 24a, second holding unit 24b, switch-over signal output unit for measurement 24c, comparator 24d, and switch-over signal output unit for selection 24e.

The first holding unit 24a temporarily holds the code error rate measured by the error rate measuring unit 23, about the optical signal modulated in intensity in either modulation mode of the first and second modes, in the optical modulating unit 1 in the optical sending apparatus 10A. The second holding unit 24b temporarily holds the code error rate measured by the error rate measuring unit 23, about the optical signal modulated in intensity in other modulation mode of the first and second modes.

The switch-over signal output unit for measurement 24c outputs the modulation operation switch-over signal for switching over themodulation operation in the optical modulating unit 1 for the modulation operation switch-over unit 3 of the optical sending apparatus 10A in order to measure the code error rate held in the first holding unit 24a and second holding unit 24b in the error rate measuring unit 23.

Specifically, in the switch-over signal output unit for measurement 24c, when a transmission path of optical signal is set and connected to the optical sending apparatus 10A, prior to actual exchange of data signal, a modulation operation switch-over signal for measurement of first error rate is output to the optical sending apparatus 10A, and therefore the optical sending apparatus 10A can send an optical signal for measurement of first error rate modulated in intensity in either one of the first and second modes. As a result, in the first holding unit 24a, the measurement result of code error rate about the optical signal for measurement of the first error rate is held.

In succession, in the first holding unit 24a, the code error rate is held, and the switch-over signal output unit for measurement 24c outputs a modulation operation switch-over signal for secondmeasurement, and the optical sending apparatus 10A sends an optical signal for measurement of second error rate modulated in intensity in other one of the first and second modes . As a result, in the second holding unit 24b, the measurement result of code error rate about the optical signal for measurement of the second error rate is held.

The comparator 24d compares the code error rates held in the first holding unit 24a and second holding unit 24b, and as a result of comparison, the modulation mode of better code error rate in the transmission path can be specified. The switch-over signal output unit for selection 24e outputs a modulation operation switch-over signal for selection to the modulation operation switch-over unit 3, in order to select the modulation mode of better code error rate as the modulation mode to be modulated in intensity in the optical modulating unit 1, on the basis of comparison result in the comparator 24d.

The above-mentioned switch-over signal output unit for measurement 24c and switch-over signal output unit for selection 24e may be designed to give the modulation operation switch-over signal to the optical sending apparatus 10A, for example, by signal light for control through transmission paths 11-1 to 11-n for the optical signal, or by electrical signal for control through other transmission paths for electrical signal. In the modulation operation switch-over unit 3 of the optical sending apparatus 10A having received such modulation operation switch-over signal, same as in the case of the first embodiment, the modulation operation in the optical modulating unit 1 canbe switchedover in accordance with the inputmodulation operation switch-over signal for error rate measurement or for selection.

In the optical transmission system 30A of the second embodiment having such configuration, at the time of initial setting of any one of transmission paths 11-1 to 11-n to be used, in the optical receiving apparatus 20A, the code error rate of signal light propagating through the transmission paths 11-1 to 11-n is measured, and on the basis of the measurement result, the modulation mode in the duo binary signal can be selected in either the first mode or the second mode.

That is, prior to signal communication through any one of transmission paths 11-1 to 11-n, the corresponding transmission paths 11-1 to 11-n to be used are set initially. At this time, through themodulation operation switch-over signal from the switch-over signal output unit for measurement 24c composing the selection control unit 24 of the optical receiving apparatus 20A, the modulation mode of signal light from the optical sending apparatus 10A is switched over between the first mode and the second mode. By the comparator 24d and the switch-over signal output unit for selection 24e, one of the two modulation modes lower in error rate is set as the modulation mode in the optical sending apparatus 10A.

Thus, according to the optical transmission system 30A of the second embodiment of the invention, same as in the above-mentioned first embodiment, since the optical sending apparatus 10A includes the modulation operation switch-over unit 3, as compared with the duo binary modulation system of the prior art, the OSNR tolerance can be improved also in the transmission path having dispersion characteristics near zero dispersion value, without sacrificing the OSNR tolerance in transmission path of high dispersion value, and also when a new transmission path is added and set between the optical sending apparatus 10A and optical receiving apparatus 20A, at the time of initial setting of the new transmission path, the optimum transmission mode conforming to the measurement result of code error rate can be selected through exchange of signals between the optical receiving apparatus 20A and optical sending apparatus 10A.

### [B1] Description of variant of second embodiment

Fig. 11 is a block diagram showing optical receiving apparatus 20B in a variant of the second embodiment of the invention. The optical receiving apparatus 20B shown in Fig. 11 is basically same as the above-mentioned optical receiving apparatus 20A shown in Fig. 9, except that an identification point adjusting unit 25 is additionally provided. In Fig. 11, same components as in Fig. 9 are identified with same reference numerals.

The identification point adjusting unit 25 performs feedback control of identification point, such that the error rate may be lowest, at identification point in the identifier 22 (threshold level or phase), on the basis of the measurement result of code error rate in the error rate measuring unit 23.

That is, the error rate measuring unit 23 measures the error rate under identificationpoint adjustment in the identification point adjusting unit 22, about the optical signal for error rate measurement in modulation mode of the first mode and second mode. In the selection control unit 24, the modulation mode having better error rate is selected under this identification point adjustment. Therefore, in addition to the same merits as in the second embodiment, the receiving signal quality in the optical receiving apparatus 20B can be further improved owing to the identification point adjusting unit 25.

### [C] Others

In addition to the illustrated embodiments, the invention can be changed and modified within a scope not departing from the spirit of the essential characteristics thereof. By referring to the disclosed embodiments, those skilled in the art can manufacture the apparatus of the invention.

## Claims

1. An optical sending apparatus comprising:
an optical modulatingunit (1) formodulating an input signal in intensity by driving electric signal of duo binary signal,
a driving signal processing unit (2) for converting from binary signal to the duo binary signal, and supplying the signal to the optical modulating unit as driving electric signal, and
a modulation operation switch-over unit (3) for switching over the modulation operation at the optical modulating unit so as to switch over the operation point bias in the optical modulating unit and to switch over the polarity of binary signal supplied to the driving signal processing unit, in accordance with the optical transmission characteristics of the transmission path for transmitting the light modulated in intensity.

2. The optical sending apparatus of claim 1, wherein the optical modulating unit includes a Mach-Zehnder optical modulator.

3. The optical sending apparatus of claim 1, wherein the modulation operation switch-over unit switches over the modulation operation in the optical modulating unit, on the basis of modulation operation switch-over signal input in accordance with the optical transmission characteristics of the transmission path for transmitting the light sent out after intensity modulation.

4. The optical sending apparatus of claim 3, wherein the modulation operation switch-over unit includes:
an operation point bias switch-over unit for switching over the operation point bias in the optical modulating unit, in accordance with the modulation operation switch-over signal, and
a data polarity switch-over unit for switching over the polarity of sending data for switching over the polarity of the binary signal supplied into the driving signal processing unit, in accordance with the modulation operation switch-over signal.

5. The optical sending apparatus of claim 4, wherein the operation point bias switch-over unit switches over the modulation mode in the optical modulating unit in accordance with the modulation operation switch-over signal, between a first mode in which the intensity of modulated light to the median value of the duo binary signal is minimum and the intensity of modulated light to other two values of the duo binary signal is maximum, and a second mode in which the intensity of modulated light to the median value of the duo binary signal is maximum and the intensity of modulated light to other two values of the duo binary signal is minimum, by switching over the operation point bias in the optical modulating unit.

6. The optical sending apparatus of claim 4, wherein the data polarity switch-over unit, in accordance with the modulation operation switch-over signal, outputs normal data of sending data as input binary signal directly to the driving signal processing unit when the modulation mode in the optical modulating unit is the first mode, or outputs inverted data of sending data as input binary signal to the driving signal processing unit when the modulation mode in the optical modulating unit is the second mode.

7. The optical sending apparatus of claim 3, wherein every transmission path for transmitting the light modified in intensity includes a storage unit for storing the modulation mode to be set, either the first mode or the second mode, and
a control unit for acquiring the setting of modulation mode in the optical modulating unit in accordance with the transmission path specified as the transmission path for transmitting the light modulated in intensity, by referring to the storage unit, and outputting the modulation operation switch-over signal to themodulation operation switch-over unit, and setting the modulation operation in the optical modulating unit as the acquired setting.

8. An optical transmission system comprising an optical sending apparatus for sending an optical signal modulated in intensity on the basis of duo binary signal, and an optical receiving apparatus for receiving an optical signal from the optical sending apparatus through a transmission path,
wherein the optical sending apparatus includes a driving signal processing unit (2) for converting from binary signal to duo binary signal, an optical modulating unit (1) for modulating an input light in intensity and sending on the basis of the duo binary signal from the driving signal processing unit, and a modulation operation switch-over unit (3) for switching over the modulation operation at the optical modulating unit so as to switch over the operation point bias in the optical modulating unit and to switch over the polarity of the binary signal supplied to the driving signal processing unit, in accordance with the modulation operation switch-over signal from the optical receiving apparatus, and
the optical receiving apparatus includes a receiving unit (21, 22) for receiving optical signal from the optical sending apparatus through transmission path, and outputting the signal as the reception data, an error rate measuring unit (23) for measuring the code error rate of reception data, and a selection control unit (24) for selecting and controlling about the modulation operation in the optical modulating unit in the optical sending apparatus on the basis of the measurement result in the error rate measuring unit about each light modulated in intensity and sent by intensity modulation by switch-over of the modulation operation in the optical modulating unit.

9. The optical transmission system of claim 8, wherein in the modulation operation switch-over unit of the optical sending apparatus,
in accordance with the modulation operation switch-over signal, the modulation mode in the optical modulating unit is switched over between a first mode in which the intensity of modulated light to the median value of the duo binary signal is minimum and the intensity of modulated light to other two values of the duo binary signal is maximum, and a second mode in which the intensity of modulated light to the median value of the duo binary signal is maximum and the intensity of modulated light to other two values of the duo binary signal is minimum, by switching over the operation point bias in the optical modulating unit, and
the modulation operation in the optical modulating unit is switched over so as to output normal data of sending data as input binary signal directly to the driving signal processing unit when the modulation mode in the optical modulating unit is the first mode, or output inverted data of sending data as input binary signal to the driving signal processing unit when the modulation mode in the optical modulating unit is the second mode, and
the selection control unit includes:
a first holding unit for temporarily holding the code error rate measured by the error rate measuring unit about the optical signal modulated in intensity by the modulation operation of modulation mode of either the first mode or the second mode,
a second holding unit for temporarily holding the code error rate measured by the error rate measuring unit about the optical signal modulated in intensity by the modulation operation of other modulation mode of either the first mode or the second mode,
a switch-over signal output unit for measurement for outputting a modulation operation switch-over signal for switching over modulation operation in the optical modulating unit to the modulation operation switch-over unit of the optical sending apparatus for measuring the code error rate to be held in the first holding unit and second holding unit in the error rate measuring unit,
a comparator for comparing the error rates held in the first holding unit and second holding unit, and
a switch-over signal output unit for selection for outputting a modulation operation switch-over signal for measurement to the modulation operation switch-over unit so as to select the modulation mode favorable in the code error rate as the modulationmode formodulating the intensity in the optical modulating unit on the basis of the result of comparison in the comparator, and
the modulation operation switch-over unit of the optical sending apparatus switches over the modulation operation in the optical modulating unit, in accordance with the modulation operation switch-over signal from the switch-over signal output unit for measurement or switch-over signal output unit for selection.
